# EUROPEAN PATENT APPLICATION

(11) **EP 2 722 193 A1**
(43) Date of publication of application: **23.04.2014**
(21) Application number: 12189318.4
(22) Date of filing: 19.10.2012
(51) Int. Cl.: B42D 25/00, G07D 7/00

(54) **Secure data carrier and method of production of said secure data carrier**

(71) Applicant: Gemalto SA, 92190 Meudon (FR)
(72) Inventor: Purdy, Steve, 92190 Meudon (FR); Chabut, Françoise, 92190 Meudon (FR)
(74) Representative: Cour, Pierre

(57) **Abstract**

The present invention concerns a data carrier (1) comprising:
- a central portion (10) covered by at least one translucent protective layer (16) on at least one of its sides,
- at least one see-through portion, comprising an orifice filled with a translucent plug (18), going at least partially through of said central portion (10),

the said central portion (10) comprising a colored core (12) and at least one opaque layer (14) colored in a color different from the colored core (12) in order to show a layered structure of different colors on the edge of the data carrier (1). The invention also concerns the method of production of the said data carrier (1).

## Description

The present invention concerns a secure data carrier. More precisely, the present invention concerns a secure data carrier incorporating anti-forger and authentication means.

A data carrier is generally made of a pilling of different layers. In particular, a data carrier comprises a central portion, on which is marked the data (e.g. name, photo and description of the owner), and at least one translucent protective layer on at least one side of the central portion.

To prove that a data carrier, such as an identification card (ID card) or a driver license card, is authentic, the controller needs to check the anti-forger and authentication means on said data carrier. One of the known anti-forger and authentication means is at least one see-through portion produced in the data carrier. A see-through portion is made by forming an orifice going at least partially through the central portion and the said orifice being filled with a translucent plug. This is a difficult process that requires expensive equipment and highly skilled engineers to accomplish.

However, forgers can imitate such a see-through portion using a translucent central portion and painting partially the said translucent central portion, or the layers composing the central portion, leaving an un-painted part appearing as a see-through portion. It is difficult to distinguish this fraudulent data carrier from an authentic data carrier with naked eyes.

An object of the invention, among others, is thus to provide an improved and secure data carrier comprising a see-through portion and where fraudulent data carrier is easy to distinguish from an authentic data carrier with naked eyes.

The present invention thus consists in a data carrier comprising:
- a central portion covered by at least one translucent protective layer on at least one of its sides,
- at least one see-through portion, comprising an orifice filled with a translucent plug, going at least partially through of said central portion,
the said central portion comprising a colored core and at least one opaque layer colored in a color different from the colored core in order to show a layered structure of different colors on the edge of the data carrier.

Due to the multi-colored multilayer central portion and especially due to the opaque layer, a forger cannot simulate a see-through portion by using a translucent central portion and by painting the said translucent central portion, leaving an unpainted area having a see-through portion appearance. If a forger attempts to replicate a data carrier structure with this method, the different color of the opaque layer on the edge of the data carrier will be missing or will clearly appear as a fake.

According to an aspect of the invention, the colored core of the central portion is sandwiched between by two opaque layers colored in a different color than the colored core.

According to another aspect of the invention, the colored core of the central portion is translucent.

According to another aspect of the invention, the colored core of the central portion is opaque.

According to another aspect of the invention, the colored core of the central portion comprises at least two layers of different colors.

According to another aspect of the invention, the see-through portion goes completely through the central portion.

According to another aspect of the invention, at least one see-through portion goes partially through the central portion.

The present invention also concerns a method of producing a data carrier, comprising the following steps:
- a first step of formation of a central portion containing at least one orifice 17, by pilling a colored core portion with at least one opaque layer of another color,
- a second step of filling the at least one orifice with a translucent plug, in order to form a see-through portion,
- a third step of application of at least one translucent protective layer on at least one side of the central portion, and
- a fourth step of adhesion of the different layers composing the data carrier.

According to an aspect of the method of production, between the first step of formation of the central portion and the second step of formation the at least one orifice in the central portion, the said method comprise an intermediate steps of pre-adhesion of the central portion.

According to an aspect of the method of production, between the first step of formation of the central portion comprises a sub-step of formation of the at least one orifice in the central portion.

The invention is explained in greater detail below with reference to the accompanying figures in which:
- the figure 1a represents a diagram of a sectional view of a data carrier according to a first embodiment,
- the figure 1b represents a diagram of the edge of the data carrier according to the first embodiment,
- the figure 2a represents a diagram of a sectional view of a data carrier according to a second embodiment,
- the figure 2b represents a diagram of the edge of the data carrier according to the second embodiment,
- the figure 3 represents a diagram of a sectional view of a data carrier according to a third embodiment,
- the figure 4 represents an flowchart of the steps of the method of producing a data carrier according to the invention.

In these figures, the same references refer to the same elements.

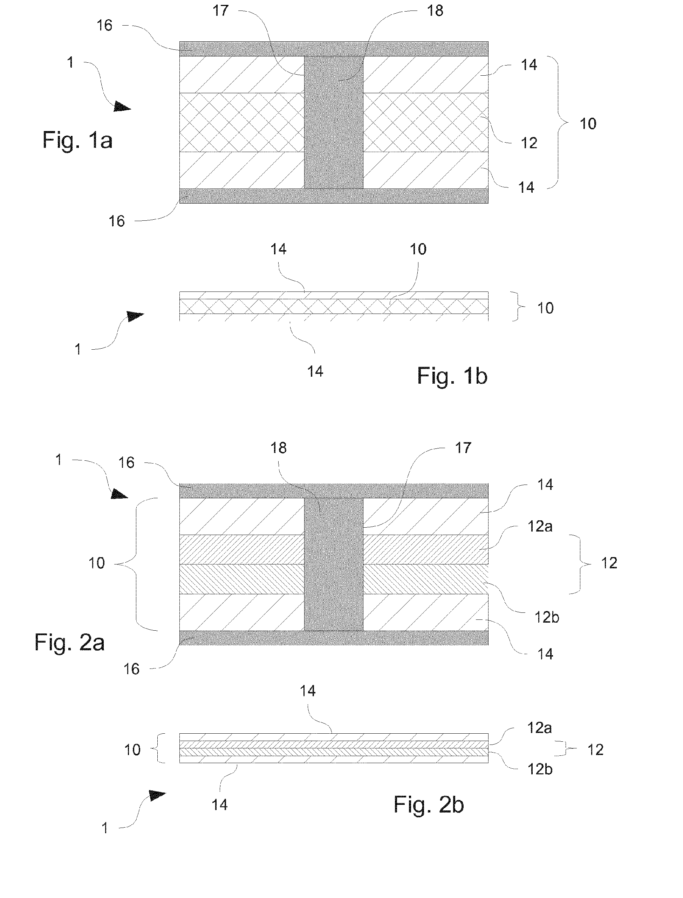

Figure 1a shows a diagram of a sectional view of a data carrier 1 , e.g. an identification card according to the international standard ISO/IEC 7810.

The data carrier comprises a central portion 10 with on at least one of its side, at least one translucent protective layer 16. The central portion 10 comprises a colored core 12 and at least one opaque layer 14 colored in a color different from the colored core 12. The colored core may be opaque or translucent.

This organization allows having a layered structure with different layers of different colors on the edge of the data carrier 1 as shown in figures 1b and 2b.

The data carrier 1 also comprises a see-through portion. The said see-through portion is formed by an orifice 17 going at least partially through the central portion and filled by a translucent plug 18.

Due to the multi-colored multilayer central portion 10 and especially due to the opaque layer 14, a forger cannot simulate a see-through portion by using a translucent central portion 10 and by painting the said translucent central portion 10, leaving an unpainted area having a see-through portion appearance. If a forger attempts to replicate a data carrier structure with this method, the different color of the opaque layer 14 on the edge of the data carrier 1 will be missing or will clearly appear as a fake.

Furthermore, the sequence of the layered structure of different colors on the edge of the data carrier 1 could be chosen in order to match with a particular type or series of data carrier 1 , helping the authentication and increasing even more the security of the said data carrier 1. The data carrier 1 comprises therefore two complementary security features, the see-through portion and the layered structure of different colors on its edge, making said data carrier highly secured.

Besides, the different layers of the central portion 10 (the colored core 12 and the at least one opaque layer 14) can be made of a same plastic material (e.g. polycarbonate (PC) or polyvinyl chloride (PVC)) or made from a combination of different plastic material (e.g. polyethylene terephthalate (PET) and polyvinyl chloride (PVC)). The translucent plug 18 of the see-through portion cans also be made of a same plastic material of the different layers of the central portion 10 or made of a different plastic material.

In a first embodiment shown in figure 1a, the data carrier 1 comprises two translucent protective layers 16, one on each side of the central portion 10. The central portion 10 comprises two opaque layers 14 on each side of a colored core 12 composed of a single colored layer and a see-through portion going completely through the central portion 10, the both two ends of the translucent plug 18 being in contact with the translucent protective layers 16.

The figure 1b shows the layered structure of different colors on the edge of the data carrier 1 as seen by a controller. The data carrier 1 shows three visible layers, for example, the opaque layers 14 can be in a first color, for example white, and the colored core 12 can be in a different color that contrasts with the color of the opaque layers 14, for example in black. The translucent protective layers 16 are not represented in figure 1b because they are difficult to be distinguished with naked eyes by the controller. Of course, colors indicated as examples can be replaced by any color, black and white being considered as colors like blue, green, red, yellow, cyan, magenta or any additive or subtractive combination of these colors.

In this first embodiment, each translucent layer 16 can be made of PVC and can have a thickness of about 50µm. Concerning the central portion 10, each opaque layer 14 can be made of PET and can have a thickness of about 150µm. The colored core 12 can be opaque or transparent, can be made of a colored PVC and can have a thickness of about 420µm. The translucent plug 18, going through the entire thickness of the central portion 10, should here have a thickness about 720µm and can be made of PVC.

In a second embodiment shows in figures 2a and 2b, the colored core 12 comprises two different colored layers 12a, 12b, e.g. made of a colored PVC and having each a thickness of about 210µm.

A controller of the authenticity of the data carrier 1 according to this second embodiment should therefore see on the edge of the said data carrier 1 , a layered structure of four colored layers as shown on figure 2b. As well as for the figure 1b, the translucent protective layers 16 are not represented in figure 2b because they are difficult to be distinguished with naked eyes by the controller

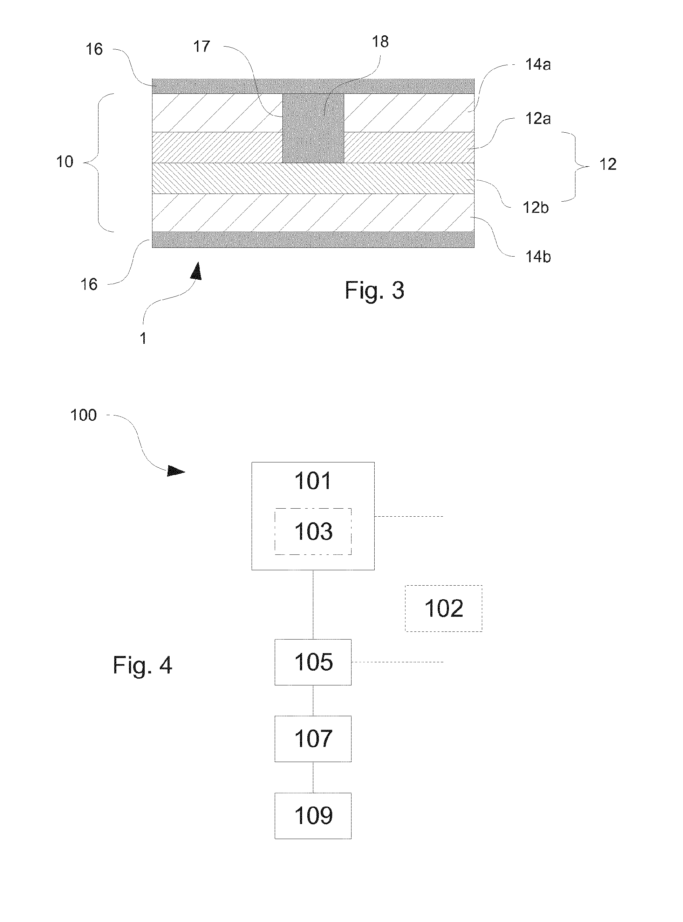

In a third embodiment shown in figure 3, the translucent plug 18 goes partially through the central portion 10. A controller looking at the see-trough portion of the data carrier 1 will therefore not see through the data carrier 1 but will see the color of the layer located at the end of the translucent plug 18.

In the example shown in figures 3, the central portion 10 of the data carrier 1 in this third embodiment comprises two opaque layers 14a and 14b. The orifice 17 and the translucent plug 18 goes through only a first opaque layer 14a. The colored core 12 also comprises two different colored layers 12a, 12b and in this example, the orifice 17 and the translucent plug 18 goes through only the first colored layer 12a. Here, a controller looking at the see-through portion will see the color of the second colored layer 12b.

The orifice 17 could also end at the interface between the first opaque layer 14a and the colored core 10, or at the interface between the second opaque layer 14b and the colored core 10. Furthermore, the orifice 17 could end in the length of the colored core 10, in the length of the colored layers 12a or 12b, or in the length of the second opaque layer 14b.

The present invention also concerns a method 100 of producing a data carrier 1 as described above. The figure 4 represents a flowchart of the steps of the method of producing of a data carrier according to the invention.

The method of producing comprises:
- a first step 101 of formation of the central portion 10 containing at least one orifice 17 by pilling a colored core portion 12 with at least one opaque layer 14 of another color,
- a second step 105 of filling of the at least one orifice 17 with a translucent plug 18, in order to form a see-through portion,
- a third step 107 of application of at least one translucent protective layer 16 on at least one side of the central portion 10, and
- a fourth step 109 of adhesion of the different layers composing the data carrier 1 , for example by a lam ination process.

The first step 101 comprises a sub-step 103 of formation of the at least one orifice 17 in the central portion 10, for example by a punching process. This sub-step 103 could be performed after the pilling of the different layers or individually on the chosen layers before the pilling

Alternatively, at the end of the first step 101, an intermediate step 102 of pre-adhesion of the layers constituting the central portion 10 could be performed in order to improve the adhesion between these layers, for example using adhesive.

Thus the data carrier 1 according to the invention and the associated method of production enable a better security of the data carrier 1 by combining two different security systems, the see-through portion and the colored multi-layer edge, making hard and expensive the reproduction and the forgery of the data carrier 1. Furthermore, this combination makes possible an easy authentication of the data carrier 1 with naked eyes, thanks to the presence of the see-through portion and the multi-layer edge.

## Claims

1. A data carrier (1) comprising:
- a central portion (10) covered by at least one translucent protective layer (16) on at least one of its sides,
- at least one see-through portion, comprising an orifice filled with a translucent plug (18), going at least partially through of said central portion (10),
**characterized in that** the said central portion (10) comprises a colored core (12) and at least one opaque layer (14) colored in a color different from the colored core (12) in order to show a layered structure of different colors on the edge of the data carrier (1).

2. A data carrier (1) according to claim 1 , wherein the colored core (12) of the central portion (10) is sandwiched between two opaque layers (14) colored in a different color than the colored core (12).

3. A data carrier (1) according to claim 1 , wherein the colored core (12) of the central portion (10) is translucent.

4. A data carrier (1) according to claim 1 , wherein the colored core (12) of the central portion (10) is opaque.

5. A data carrier (1) according to claim 1 , wherein the colored core (12) of the central portion (10) comprises at least two layers (12a, 12b) of different colors.

6. A data carrier (1) according to claim 1, wherein the see-through portion goes completely through the central portion (10).

7. A data carrier (1) according to claim 1, **characterized in that** the at least one see-through portion goes partially through the central portion (10).

8. A method (100) of producing a data carrier (1), **characterized in that** it comprises the following steps:
- a first step (101) of formation of a central portion (10) containing at least one orifice (17), by pilling a colored core portion (12) with at least one opaque layer (14) of another color,
- a second step (105) of filling the at least one orifice (17) with a translucent plug (18), in order to form a see-through portion,
- a third step (107) of application of at least one translucent protective layer (16) on at least one side of the central portion (10), and
- a fourth step (109) of adhesion of the different layers composing the data carrier (1).

9. A method (100) of producing a data carrier (1) according to claim 8, wherein at the end of the first step (101) of formation of the central portion (10), the said method (100) comprise an intermediate steps (102) of pre-adhesion of the central portion (10).

10. A method (100) of producing a data carrier (1) according to claim 8, wherein the first step (101) of formation of the central portion (10) comprises a sub-step (103) of formation of the at least one orifice (17) in the central portion (10).
